# EUROPEAN PATENT APPLICATION

(11) **EP 4 729 494 A1**
(43) Date of publication of application: **22.04.2026**
(21) Application number: 25387158.6
(22) Date of filing: 17.10.2025
(51) Int. Cl.: C03C 17/00, E06B 3/663, E06B 3/66, C03C 17/28

(54) **VACUUM INSULATING GLASS SYSTEM PRODUCTION METHOD WITH UV LIQUID GLASS RESIN SPACERS**

(30) Priority: 18.10.2024 GR 20240100736
(71) Applicant: Global Samaras Single Member P.C., 59200 Naousa (GR)
(72) Inventor: DAIOU, Maria, Naousa (GR)

(57) **Abstract**

Vacuum insulating glass system production method with UV liquid glass resin spacers (100), comprising two glass panes (10, 20) having a minimal distance between them; UV liquid glass resin spacers (40) printed on one glass pane (20) by means of an automatic 3D liquid glass printer in a specified diameter, layout and height and polymerised using ultraviolet (UV) radiation within the 3D printer; a perimeter seal (30) applied on the same glass pane (20), followed by alignment of the glass panes and their introduction into a high-vacuum chamber, where one inner edge (60) of the upper glass pane (10) is in contact with the perimeter seal (30) while its parallel inner edge (70) is held at a minimum height and, once evacuation is achieved, the raised edge (70) is released in order to come into contact with the perimeter seal (30) and the evacuated space (50) between the glass panes (10, 20) and the perimeter seal (30).

## Description

This invention concerns a vacuum insulated glass system production method where vacuum insulation is achieved in the cavity between the two glass panes through the use of micro-spacers made of UV liquid glass resin so that the gap between the glass panes can be maintained.

The Vacuum Insulated Glass (VIG) system is known worldwide.

The original patent for vacuum insulated glass (VIG) was filed in 1913, while the product has been commercially available since 1996.

Some examples are included in the following patents: EP 3 611143 A1, EP 3 225 601 A1 and US2012315409A1.

Vacuum insulated glass (VIG) has numerous advantages.

In vacuum insulation, the removal of air molecules results in the absence of material which could transfer heat between the interior and exterior glass pane. Therefore, vacuum is an excellent thermal barrier.

The enhanced insulating properties of vacuum insulated glass systems help maintain stable internal temperatures, reducing the need for excessive heating or cooling.

The vacuum insulated glass (VIG) system has a very slim overall profile, particularly compared to conventional double glazing; this feature renders it extremely beneficial in the renovation of old or even listed buildings, in which it is prohibited to exceed their shell boundaries and/or to change their external appearance.

Moreover, it has excellent soundproofing properties, which is quite useful in many applications, such as hospitals, large urban centres, buildings near airports, etc.

The vacuum insulated glass (VIG) system is also very light, as its weight is almost a third of the weight of conventional triple glazing; this results in its easy transport and installation.

Despite the high cost of a vacuum insulated glass (VIG) system, there are long-term benefits and savings thanks to its longer service life and lower energy consumption, as well as the energy efficiency of buildings.

A typical vacuum insulated glass (VIG) production method is presented below.

Two sheets of glass (glass panes) are placed in parallel and aligned with each other, maintaining a minimum gap between them, in which a number of microscopic spacers are arranged in a way that maintains this gap. The two panes are sealed along the perimeter using a bonding material, usually applied at a high temperature. One of the panes has a hole throughout its thickness, in which an evacuation tube is attached; this constitutes the evacuation port, through which atmospheric air is pumped out in order to achieve vacuum in the gap between the panes. The tube is eventually sealed so that the effect of evacuation can be maintained.

The use of spacers is critical in vacuum insulated glass (VIG) system production. Spacers are used to maintain a well-defined gap between the glass panes and therefore strict specifications apply in terms of their size, geometry and properties. The array must maintain atmospheric pressure and not fail when external loads are acting on the vacuum insulated glass (VIG) system. The spacers serve as a thermal bridge between the glass panes and therefore affect the overall thermal transmittance of the vacuum insulated glass (VIG) system.

Spacers are usually created by placing one or more films stacked, one on top of the other.

The spacers' materials may vary from liquid glass, stainless steel or other metal or nanocomposite materials.

The main disadvantage of the vacuum insulated glass (VIG) system is its high cost, especially compared to the conventional double insulating panels that are widely used today.

A key disadvantage the of vacuum insulated glass (VIG) systems produced to date is the bonding material used for the perimeter sealing of the two glass sheets, as it required the use of very high temperature for a long time in order to stabilise, which renders it time-consuming and costly.

A challenge faced by a vacuum insulated glass (VIG) system is maintaining vacuum for a long time. The bonding material used for the perimeter sealing of the glass sheets, when subjected to high temperatures for a long time, after the installation of the vacuum insulated glass (VIG) system, may deteriorate and become inadequate, thus affecting the thermal transmittance of the vacuum insulated glass (VIG) system.

Moreover, the creation of a hole in one of the two glass sheets of a typical vacuum insulated glass (VIG) system and the attachment of a tube to it in order to pump out atmospheric air from the gap between the glass panes during vacuum creation is a time-consuming process that adds a supplementary cost to the production method and also affects the aesthetic result of the final product.

The evacuation and sealing method using an evacuation port entails risks related to maintaining the evacuation result over time, thus affecting the thermal transmittance of the vacuum insulated glass (VIG) system.

This invention concerns a vacuum insulating glass system production method which uses micro-spacers made of UV liquid glass resin, thus eliminating the above disadvantages.

The invention presented consists of two glass panes that are aligned in parallel and maintain a minimum distance between them, on which UV liquid glass resin spacers are fitted, the perimeter sealing of the two glass panes, and the evacuated space enclosed by the two glass panes and the perimeter sealing.

This invention uses one-component UV liquid glass resin as a construction material of the spacers that maintain the distance between the glass panes; these spacers are created and simultaneously placed in one glass pane using an automatic liquid glass 3D printer in a specified diameter, layout and height; they are then polymerised using ultraviolet (UV) radiation within the 3D printer; subsequently the perimeter sealing material, namely a high-temperature one-component neutral silicone, is placed along the perimeter of the same glass pane on which the spacers were placed, the second glass pane is also placed and, after the glass panes are aligned, they enter a high-vacuum chamber where one inner edge of the upper glass pane is in contact with the perimeter sealing, while its parallel inner edge is held at a minimum height throughout the evacuation process. When the desired degree of evacuation has been achieved, the raised edge is released, so that it can rest on the perimeter sealing and the evacuated space can be sealed.

The material used for the printing of the spacers, i.e. the UV Liquid Glass Resin, is a non-toxic one-component material which does not require mixing with any other material, polymerises in 2 to 4 minutes using ultraviolet radiation, and even in direct sunlight it only needs 8-10 minutes. It is extremely weather resistant, has a long service life in its solid form and does not turn yellow after years of exposure to sunlight. It has an operating temperature range from -55o C to 100o C, a viscosity of 600-1300 mPa.s (cP), a tensile strength (ASTM D-2095-69) 13-16 N/mm² (1900 psi - 2300 psi), a tensile strength (ISO37) 17 N/mm² (2500 psi) and a curing wavelength of 365 - 400 nm.

The use of an automatic liquid glass (3D) printer to print the UV Liquid Glass Resin spacers, which (printer) creates and simultaneously places the spacers in their final position, in a specified diameter, layout and height, immediately followed by the use of UV radiation which achieves curing and stabilisation of the spacers, ultimately leads to significant reductions in the time required and, therefore, in the cost of production of the final product.

Using this production method, no hole is required throughout the thickness of the glass pane, nor attachment of an evacuation tube to create an evacuation port. This results in a faster production method and a reduction of the time required for its completion, eliminates the possibility of vacuum loss from the evacuation port, and achieves a better aesthetic result of the final product.

The method used for evacuation in this invention within the high-vacuum chamber, namely by retaining at a minimum height one inner edge of one glass pane until the degree of evacuation is achieved and then releasing it to rest on the perimeter sealing in order to close hermetically and retain the vacuum, is simpler, more efficient, and saves time and cost in the production process.

Moreover, the bonding material used for the perimeter sealing of the two glass panes and for maintaining the vacuum in the gap between them is high-temperature one-component silicone, non-epoxy, non-toxic, which does not require mixing with another material and, in particular, does not require high temperature in order to achieve maturation and curing. It has an operating temperature range from -45o C to 260o C, low thermal conductivity, an excellent degree of elasticity, and is resistant to UV radiation. Its full maturation is achieved in less than 24h in ambient conditions, it has a degree of elasticity >300% and a capacity of 3.3 N/mm². It therefore has better results in maintaining evacuation compared to the bonding materials that have been used to date and helps reduce production time and cost.

A typical thermal transmittance value U of vacuum insulated glass (VIG) systems used today ranges from 0.4 to 0.7 W/M2K, while the thermal transmittance U of the vacuum insulated glass (VIG) system with UV liquid glass resin spacers ranges from 0.25 to 0.4 W/M2K, resulting in better thermal insulation.

The presented vacuum insulating glass system production method with UV liquid glass resin spacers contributes to increased production speed, reduced cost reduction and better thermal insulation. Therefore, it is more economical and efficient.
Figure 1 depicts the front view of the vacuum insulating glass system with UV liquid glass resin spacers (100).
Figure 2 depicts cross-section A-A of the vacuum insulating glass system with UV liquid glass resin spacers (100). It consists of two glass panes (10, 20), a perimeter seal (30), spacers made of UV liquid glass resin (40), and the evacuated space (50) between the two glass panes.
Figure 3 depicts the steps of the vacuum insulating glass system production method with UV liquid glass resin spacers (100).
Figure 4 depicts cross-section A-A of the vacuum insulating glass system with UV liquid glass resin spacers (100), where one inner edge (60) of the upper glass pane (10) is in contact with the perimeter seal (30), while its parallel inner edge (70) is maintained at a minimum height during evacuation.

This invention is described in detail with reference to the following figures:

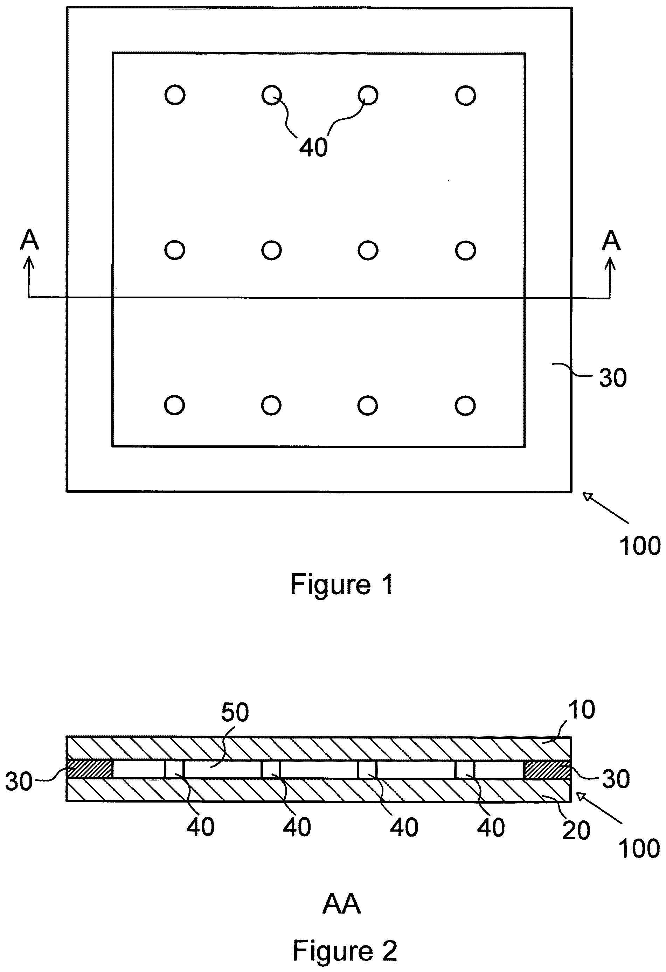

Figure 1 depicts a vacuum insulating glass system with UV liquid glass resin spacers (100), in which UV liquid glass resin spacers (40) are created and simultaneously placed by means of an automatic 3D liquid glass printer, the UV liquid glass resin spacers (40) having a diameter of 0.5 mm to 1 mm and a spacing of 50 mm to 60 mm between them, and wherein the perimeter seal (30) of the two glass panes is placed.

Figure 2 depicts, in cross-section, a vacuum insulating glass system with UV liquid glass resin spacers (100), which consists of two glass panes (10, 20) aligned in parallel while maintaining a minimum distance between them of 0.3 mm to 1 mm, within which UV liquid glass resin spacers (40) are positioned in order to maintain the mentioned distance, the perimeter seal (30) of the two glass panes (10, 20), which hermetically seals the gap between them, and the evacuated space (50) created in the gap between the glass panes where the UV liquid glass resin spacers (40) are fitted, and which is enclosed by the two glass panes (10, 20) and the perimeter seal (30).

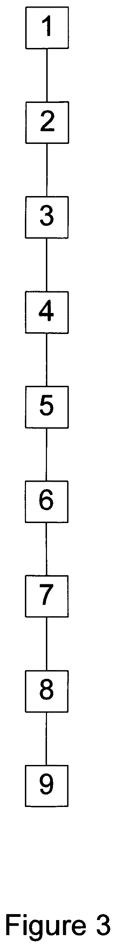

Figure 3 depicts the steps followed during the vacuum insulating glass system production method with UV liquid glass resin spacers (100):
In step (1), the glass panes (10,20) are cut to the desired size,
In step (2), grinding along the perimeter of the glass panes (10, 20) is carried out in order to smooth their edges,
In step (3), thermal tempering treatment of the glass panes (10, 20) is carried out, where required,
In step (4), the glass panes (10, 20) are washed and dried,
In step (5), the UV liquid glass resin spacers (40), which are a non-toxic, one-component material not requiring mixing with another material, are printed on the surface of one glass pane, which is now considered the lower glass pane (20), using an automatic 3D liquid glass printer, in a specified diameter, layout and height,
In step (6), polymerisation of the UV liquid glass resin spacers (40) is carried out within 2-4 minutes, using ultraviolet (UV) radiation inside the 3D printer, in order for them to be stabilized,
In step (7), the material of the perimeter seal (30), which is a high-temperature neutral silicone, one-component and non-epoxy, and which cures under ambient conditions, is applied along the perimeter of the same lower glass pane (20) on which the UV liquid glass resin spacers (40) have been placed,
In step (8), the second, upper glass pane (10) is aligned with the first, lower glass pane (20), maintaining one inner edge (60) of the upper glass pane (10) in contact with the perimeter seal (30), whereas the second, parallel inner edge (70) of the upper glass pane (10) is held at a minimum height so as not to come into contact with the perimeter seal (30),
In step (9), the glass pane assembly is placed in a high-vacuum chamber and evacuation is performed. When the desired degree of evacuation is achieved, the raised inner edge (70) of the upper glass pane (10) is released so as to come into contact with the perimeter seal (30), in order to seal the space between the two glass panes and maintain the vacuum that has been created. The vacuum insulating glass system with UV liquid glass resin spacers (100) is left at room temperature until the perimeter seal (30) hardens and stabilizes,
No hole is formed in either glass pane (10, 20) to serve as an evacuation port through which atmospheric air is evacuated.

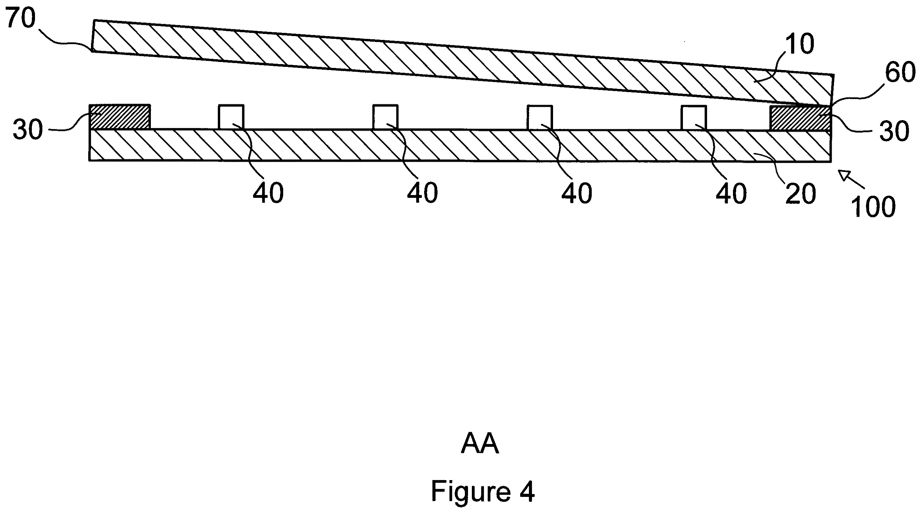

Figure 4 depicts, in cross-section, a vacuum insulating glass system with UV liquid glass resin spacers (100), in which it is shown how one inner edge (70) of the upper glass pane (10) is held at a minimum height, while its parallel inner edge (60) is in contact with the perimeter seal (30), during the evacuation process inside the high-vacuum chamber, until the desired degree of evacuation is achieved.

It is also possible to construct a double insulated glazing unit using the above-mentioned vacuum insulating glass system with UV liquid glass resin spacers (100) and an energy glass pane, with a gap between them, which is filled with Argon gas, and also a triple insulated glazing unit with two energy glass panes on either side and, between them, the above-mentioned vacuum insulating glass system with UV liquid glass resin spacers (100).

## Claims

1. Vacuum insulating glass system production method with UV liquid glass resin spacers (100), where said system consists of two glass panes (10, 20) aligned in parallel while maintaining a minimum distance between them, within which UV liquid glass resin spacers (40) are placed, a perimeter seal (30) of the two glass panes (10, 20), and the evacuated space (50) enclosed by the two glass panes (10, 20) and the perimeter seal (30), within which the UV liquid glass resin spacers (40) are located, and the sequence of its production method is as follows: the glass panes (10, 20) are cut to the desired size, grinding along the perimeter of the glass panes (10, 20) is carried out in order to smooth their edges, they undergo thermal tempering treatment, where required, the glass panes (10, 20) are washed and dried, the UV liquid glass resin spacers (40) are placed, the UV liquid glass resin spacers (40) are polymerised using ultraviolet (UV) radiation, the perimeter seal material is applied along the perimeter of one glass pane (20), the second glass pane (10) is aligned with the first glass pane, evacuation is carried out and the evacuated space (50) is sealed, and
**it is characterised by the fact that**
• the UV liquid glass resin spacers (40) are created and simultaneously placed on one glass pane (20) by means of an automatic 3D liquid glass printer, in a specified diameter, layout, and height,
• the UV liquid glass resin spacers (40) are formed from a one-component UV liquid glass resin and are then immediately polymerised by ultraviolet (UV) radiation inside the automatic 3D liquid glass printer,
• the material of the perimeter seal (30) of the two glass panes (10, 20) is a high-temperature, one-component, non-epoxy neutral silicone, which cures under ambient conditions,
• no evacuation port is created in the glass panes (10, 20),
• evacuation is carried out in a high-vacuum chamber, into which the aligned glass panes (10, 20) are introduced, with the lower glass pane (20) having the polymerised UV liquid glass resin spacers (40) fitted thereon and the perimeter seal material (30) applied, and with the upper glass pane (10) having one of its inner edges in contact with the perimeter seal (30) while its opposite parallel inner edge is held at a minimum height so as not to be in contact the perimeter seal (30), maintaining this position until evacuation is completed, and immediately afterwards the raised edge is released so as to come into contact with the perimeter seal (30) and to seal the evacuation.

2. Vacuum insulating glass system production method with UV liquid glass resin spacers, according to claim 1, **characterised by** the fact that the diameter of the UV liquid glass resin spacer (40) ranges from 0.5 mm to 1 mm.

3. Vacuum insulating glass system production method with UV liquid glass resin spacers, according to claim 1, **characterised by** the fact that the distance between the UV liquid glass resin spacers (40) ranges from 50 mm to 60 mm.

4. Vacuum insulating glass system production method with UV liquid glass resin spacers, according to claim 1, **characterised by** the fact that the minimum distance between the glass panes (10, 20) ranges from 0.3 mm to 1 mm.
